# EUROPÄISCHE PATENTSCHRIFT

(11) **EP 1 192 345 B1**
(45) Veröffentlichungstag und Bekanntmachung des Hinweises auf die Patenterteilung: **21.04.2004**
(21) Anmeldenummer: 00952911.6
(22) Anmeldetag: 06.07.2000
(51) Int. Cl.: F02D 41/20, H01L 41/04

(54) **VERFAHREN UND VORRICHTUNG ZUM LADEN EINES KAPAZITIVEN STELLGLIEDES**
METHOD AND DEVICE FOR CHARGING A CAPACITIVE ACTUATOR
PROCEDE ET DISPOSITIF PERMETTANT DE CHARGER UN ACTIONNEUR CAPACITIF

(30) Priorität: 07.07.1999 DE 19931235
(43) Veröffentlichungstag der Anmeldung: 03.04.2002
(73) Patentinhaber: SIEMENS AKTIENGESELLSCHAFT, 80333 München (DE)
(72) Erfinder: PIRKL, Richard, D-93053 Regensburg (DE); LINGL, Wolfgang, D-93057 Regensburg (DE); HOFFMANN, Christian, D-93057 Regensburg (DE)
(86) Internationale Anmeldenummer: PCT/DE2000/002216
(87) Internationale Veröffentlichungsnummer: WO 2001/004481

(56) Entgegenhaltungen:
- DE-A- 19 529 667
- DE-A- 19 714 607
- DE-A- 19 733 560
- DE-C- 19 652 801
- PATENT ABSTRACTS OF JAPAN vol. 015, no. 057 (M-1080), 12. Februar 1991 (1991-02-12) & JP 02 286852 A (TOYOTA MOTOR CORP), 27. November 1990 (1990-11-27)
- PATENT ABSTRACTS OF JAPAN vol. 1998, no. 13, 30. November 1998 (1998-11-30) & JP 10 227249 A (TOYOTA MOTOR CORP), 25. August 1998 (1998-08-25)
- PATENT ABSTRACTS OF JAPAN vol. 014, no. 316 (E-0949), 6. Juli 1990 (1990-07-06) -& JP 02 103970 A (TOYOTA MOTOR CORP), 17. April 1990 (1990-04-17)

## Beschreibung

Die Erfindung betrifft ein Verfahren zum Laden eines kapazitiven Stellgliedes, insbesondere eines Kraftstoffeinspritzventils einer Brennkraftmaschine. Die Erfindung betrifft auch eine Vorrichtung zur Durchführung dieses Verfahrens.

Einer der Vorteile bei der Ansteuerung von Kraftstoffeinspritzventilen einer Brennkraftmaschine mittels Piezostellgliedern statt Solenoiden ist die kurze Schaltzeit der Stellglieder, die zu steilen Nadelflanken und geringen Streuungen der eingespritzten Kraftstoffmengen führt. Aus verbrennungstechnischer Sicht sind möglichst kurze Ladezeiten anzustreben.

Zur Erzielung eines sanfteren Verbrennungsverlaufs wird die Kraftstoffmenge in Vor- und Haupteinspritzmenge geteilt, was eine langsamere Verbrennung und damit eine Verbrennungsgeräusch-Reduzierung ermöglicht. Die Stellglieder werden bisher mit einer konstanten Lade- und Entladezeit (Dauer der Umladung von einer Energiequelle auf das Stellglied oder umgekehrt) angesteuert, die sehr kurz sein muß (beispielsweise 100µs), damit eine vorgegebene Kraftstoff-Voreinspritzmenge auch im obersten Last- oder Drehzahlbereich der Brennkraftmaschine noch eingespritzt werden kann.

Der Ladeprozeß erfolgt beispielsweise als Umschwingvorgang der Ladung von einer Ladungsquelle (einer Reihenschaltung eines Lade- und eines Umladekondensators) über eine Umladespule zum Stellglied, wobei die Induktivität der Umladespule zusammen mit den Kapazitäten der Umladekondensatoren und des Stellgliedes die Zeitkonstante für den Lade- und Entladevorgang (die Lade- und Entladezeit) bestimmt. Eine derartige Vorrichtung ist aus DE 19652801 bekannt.

Aus DE 195 29 667 C2 ist eine Anordnung zur Ansteuerung zweier piezoelektrischer Aktoren bekannt, bei welcher die Frequenz der Schwingkreise, in denen die piezoelektrischen Aktoren angeordnet sind, zur Kompensation von Temperatur- und Alterungseffekten veränderbar sind.

In DE 197 14 607 A1 wird ein Verfahren zum stufenweisen Laden und Entladen eines piezoelektrischen Elements beschrieben, wobei der Umladevorgang zu einem bestimmten Zeitpunkt nach Ladebeginn von einem Ladepfad mit einem Widerstand und einem Kondensator auf einen Ladepfad mit einer Spule und einem weiteren Kondensator umgeschaltet wird. Der Entladevorgang erfolgt in umgekehrter Reihenfolge.

Die kurzen Ladezeiten führen jedoch zu hohen Geräuschemissionen in für menschliche Ohren unangenehmen Frequenzbereichen. Dies wird beispielsweise in einem Kraftfahrzeug dann als sehr störend empfunden, wenn im Leerlauf der Brennkraftmaschine die Verbrennungsgeräusche niedrig sind.

Es ist Aufgabe der Erfindung, ein Verfahren zum Ansteuern eines kapazitiven Stellgliedes eines Kraftstoffeinspritzventils einer Brennkraftmaschine anzugeben, welches eine deutliche Verminderung der Stellglied-Geräuschemissionen ermöglicht. Es ist auch Aufgabe der Erfindung, eine Vorrichtung zur Durchführung dieses Verfahrens zu schaffen.

Diese Aufgabe wird erfindungsgemäß durch die im Anspruch 1 genannten Merkmale gelöst. Mit einer Vorrichtung gemäß Anspruch 3 oder 4 werden die Lade- und Entladezeiten eines Stellgliedes, insbesondere im Niedriglast- und Leerlaufbereich der Brennkraftmaschine, durch verschiedene Maßnahmen während des Ladevorgangs variiert, beispielsweise in einem Bereich zwischen 100µs und 200µs.

Das erfindungsgemäße Verfahren besteht darin, daß die Gesamtkapazität der Umladekondensatoren, über welche das Stellglied geladen wird, hier also die Kapazität wenigstens zweier parallelgeschalteter Umladekondensatoren C2a, C2b, die beispielsweise eine maximale Ladezeit von 200µs ermöglichen, zu einem bestimmten Zeitpunkt während eines Ladevorgangs durch Abschalten wenigstens eines dieser parallelen Umladekondensatoren verringert wird, wodurch die Ladezeit verkürzt wird.

Für die Wahl optimaler Ladezeiten gilt: die Dauer der Ladezeit begrenzt die minimale Kraftstoff-Einspritzdauer. Dies ist insbesondere bei hohen Einspritzdrücken kritisch, weil die eingespritzte Kraftstoffmenge bei gleicher Einspritzdauer mit dem zur Last proportionalen Kraftstoffdruck ansteigt. Zur Erzielung einer bestimmten Einspritzmenge, insbesondere einer geringen Voreinspritzmenge, sind daher mit wachsendem Kraftstoffdruck immer kürzere Einspritzdauern erforderlich.

Bei einer Haupteinspritzung sind die Einspritzmengen hingegen last- bzw. druckabhängig. Bei geringer Last werden kleine Einspritzmengen benötigt, bei großer Last aber große Einspritzmengen bei großem Kraftstoffdruck. Diese Korrelation zwischen Kraftstoffmenge und Kraftstoffdruck ermöglicht die Verwendung längerer Ladezeiten für die Haupteinspritzung auch im Hochlastbereich.

Unterschiedliche Ladezeiten eines kapazitiven Stellgliedes haben innerhalb gewisser Grenzen, beispielsweise zwischen 100µs und 200µs, bis auf Totzeiteffekte (Verzögerungen von Einspritzbeginn und -ende), die durch zeitliche Verschiebung der Ansteuersignale kompensiert werden können, keinen Einfluß auf den für einen Verbrennungsprozeß relevanten Einspritzverlauf.

Ausführungsbeispiele einer Vorrichtung zur Durchführung des erfindungsgemäßen Verfahrens sind im folgenden unter Bezugnahme auf die schematische Zeichnung näher erläutert. Es zeigen:
- Figur 1: eine Prinzipschaltung einer bekannten Vorrichtung,
- Figur 2: ein erstes Ausführungsbeispiel nach der Erfindung,
- Figur 3: ein Diagramm der Lade- und Entladezeiten des Ausführungsbeispiels nach Figur 2,
- Figur 4: ein zweites Ausführungsbeispiel nach der Erfindung,
und
- Figur 5: ein Diagramm der Lade- und Entladezeiten des Ausführungsbeispiels nach Figur 4.

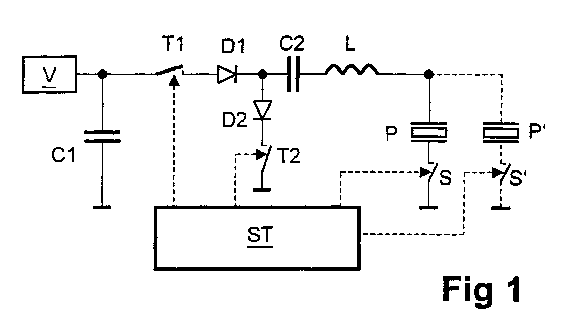

Die prinzipielle Schaltung einer bekannten Vorrichtung zum Laden und Entladen eines kapazitiven Stellgliedes P nach Figur 1 besteht aus einer beidseitig mit Massebezugspotential verbundenen Reihenschaltung einer von einer Energiequelle V ladbaren Ladungsquelle, hier eines Ladekondensators C1, eines Ladeschalters T1, einer Sperrdiode D1, eines Umladekondensators C2, einer Umladespule L und eines oder mehrerer parallelgeschalteter Stellglieder P, P', wobei mit jedem Stellglied P, P'ein Auswahlschalter S, S' in Reihe geschaltet ist. Der zum Ladeschalter T1 führende Anschluß des Umladekondensators C2 ist über einen mit einer weiteren Sperrdiode D2 in Reihe liegenden Entladeschalter T2 mit Massebezugspotential verbindbar. Die beiden Schalter T1 und T2 werden von einer Steuerschaltung ST gesteuert. Die Kapazität des Ladekondensators C1 ist wesentlich größer als die des Umladekondensators C2: C1 >> C2.

Wenn von Lade-, Entlade- oder Auswahlschaltern gesprochen wird, so sind darunter vorzugsweise Schalter zu verstehen, die leitend oder nichtleitend geschaltet werden, beispielsweise Thyristoren, oder MOSFET's (mit einer Diode in Reihenschaltung), die von selbst wieder nichtleitend werden, wenn der durch sie fließende Strom zu Null wird.

Das Laden eines Stellgliedes P erfolgt durch Schließen (leitendschalten) des Ladeschalters Tl. Dabei schwingt die Ladung mit einem Strom I in Form einer halben Sinusschwingung von der Ladungsquelle (dem Ladekondensator C1) über den Umladekondensator C2 und die Umladespule L zum Stellglied P. In dieser Zeit, der Ladezeit, steigt die Stellgliedspannung U auf einen bestimmten Wert, und das Stellglied P öffnet das Kraftstoffeinspritzventil.

Wenn der Strom I zu Null wird, wird der Ladeschalter T1 wieder geöffnet (nichtleitend), die Stellgliedspannung U bleibt erhalten, bis der Entladevorgang mit dem Schließen (leitendschalten) des Entladeschalters T2 beginnt. Nun schwingt die Ladung vom Stellglied P über die Umladespule L in den Umladekondensator C2; die Stellgliedspannung U geht wieder nach null, der Strom I wird zu Null und das Kraftstoffeinspritzventil wird vom Stellglied P geschlossen. Der Entladeschalter T2 muß vor dem nächsten Ladevorgang wieder geschlossen (nichtleitend) werden. Damit ist ein Einspritzvorgang beendet. Eine Rückladung in den Ladekondensator C1 wird durch die Sperrdiode D1 verhindert.

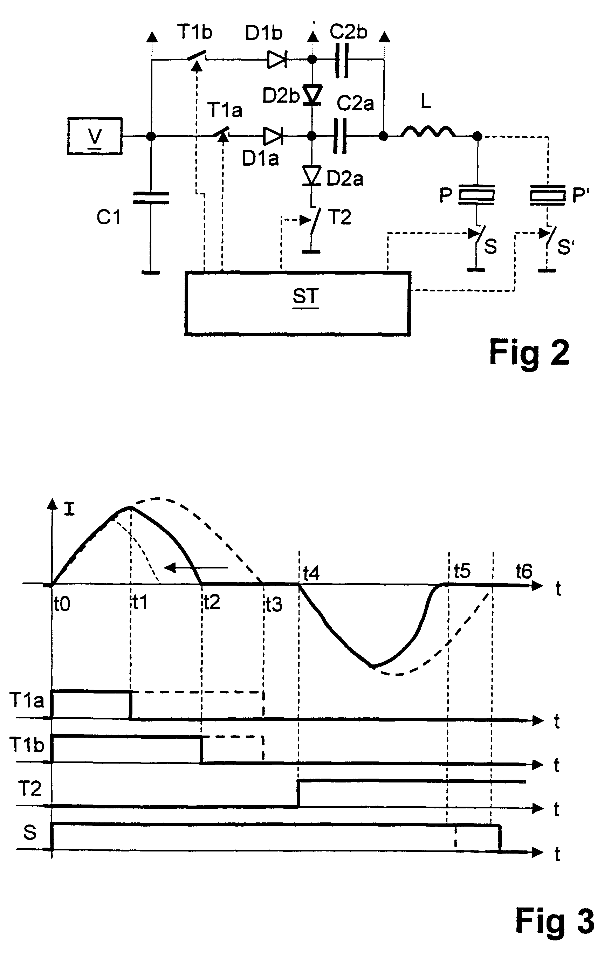

Figur 2 zeigt die Schaltung eines ersten Ausführungsbeispiels nach der Erfindung, welche sich von der bekannten Schaltung nach Figur 1 dadurch unterscheidet, daß parallel zur Reihenschaltung aus Ladeschalter T1a, Sperrdiode D1a und Umladekondensator C2a eine gleichartige Reihenschaltung aus einem weiteren Ladeschalter T1b, einer weiteren Sperrdiode D1b und eines weiteren Umladekondensators C1b geschaltet ist, und daß die den Ladeschaltern T1a und T1b zugewandten Anschlüsse der beiden Umladekondensatoren C2a und C2b durch eine vom Umladekondensator C2b zum Umladekondensator C2a leitende Diode D2b miteinander verbunden sind. Weitere derartige parallelgeschaltete Reihenschaltungen können vorgesehen werden, was durch punktierte Pfeile angedeutet ist.

Die Arbeitsweise dieser Schaltung wird nachstehend anhand des in Figur 3 dargestellten Diagramms des Stromverlaufs I im Stellglied P und der Schaltstellungen der Ladeschalter T1a und T1b sowie des Entladeschalters T2 erklärt.

Die beiden Umladekondensatoren C2a und C2b sind so dimensioniert, daß die Ladung des Stellgliedes P (oder P') aus einer Parallelschaltung beider Kondensatoren C2a und C2b mit einer gewünschten, maximalen Ladezeit von beispielsweise 200µs erfolgt.

Dazu werden zum Zeitpunkt t0 (Figur 3) beide Ladeschalter T1a und T1b gleichzeitig leitend gesteuert, wodurch das Stellglied P aus den Kondensatoren C1, C2a und C2b über die Umladespule L geladen wird und ein sinusförmiger Strom I durch das Stellglied P, welches durch den Auswahlschalter S ausgewählt wurde, zu fließen beginnt. Die Spannung an beiden Umladekondensatoren C2a und C2b sinkt gleichmäßig. Bleiben beide Ladeschalter T1a und T1b (gestrichelt dargestellt) leitend, bis der Strom I (gestrichelte Kurve) im Zeitpunkt t3 zu Null wird, so beträgt die Ladezeit t3-t0 = 200µs.

Erfindungsgemäß wird nun zur Erzielung einer kürzeren Ladezeit beispielsweise der Ladeschalter T1a vorzeitig im Zeitpunkt t1 geöffnet, d.h., nichtleitend gesteuert. Dadurch erfolgt der Stromfluß nur noch aus der Reihenschaltung der beiden Kondensatoren C1 und C2b, wodurch der Strom I (ausgezogene Kurve) bereits im Zeitpunkt t2 zu Null wird, zu welchem Zeitpunkt auch der zweite Ladeschalter wieder nichtleitend wird. Durch diese Maßnahme hat die Ladezeit nur noch die Dauer t2 - t0. Das Ende der im Zeitpunkt t0 beginnenden Ladezeit kann auf diese Weise zwischen < t1 und t3 variieren, wodurch Ladezeiten von < 100µs bis zum gewählten Maximum, hier 200µs, gewählt werden können. Am Ende des Ladevorgangs (t2) liegt am ersten Umladekondensator C2a, der nicht ganz entladen wurde, noch eine Spannung von beispielsweise +80V, während die Spannung am zweiten Umladekondensator C2b beispielsweise -50V betragen kann.

Beim Entladen des Stellgliedes P, beispielsweise im Zeitpunkt t4 beginnend, beide Ladeschalter T2a und T2b sind bereits nichtleitend, wird Entladeschalter T2 leitend gesteuert. Dadurch wird das Stellglied P über die Umladespule L in beide nun mittels der Dioden D2a und D2b parallelgeschalteten Umladekondensatoren C2a und C2b entladen, wobei zuerst der zweite Umladekondensator C2b solange geladen wird, bis er die Spannung (+80V) des ersten Umladekondensators C2a erreicht; anschließend werden beide Umladekondensatoren gleichmäßig weitergeladen, bis das Stellglied P entladen ist. Auf diese Weise entspricht jede Entladezeit der jeweils vorangegangenen Ladezeit. Die Entladezeit endet bei dem gewählten Beispiel (Ladezeit t0 bis t2) also bereits im Zeitpunkt t5 (ausgezogene Kurve) statt im Zeitpunkt t6 (gestrichelte Kurve).

Der jeweilige Auswahlschalter, S oder S', muß mindestens vom Beginn (t0) der Ladezeit bis zum Ende der Entladezeit (t5 oder t6) leitend sein.

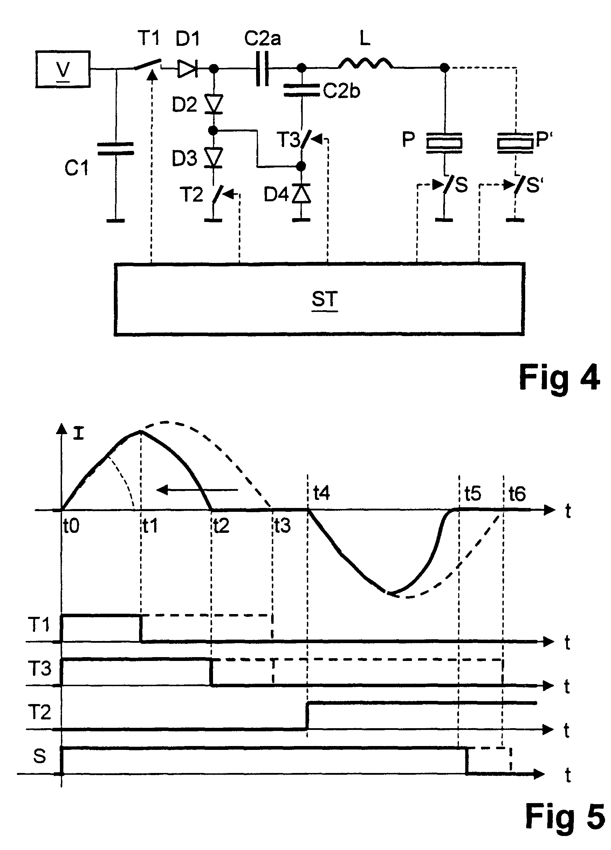

Figur 4 zeigt die Schaltung eines zweiten Ausführungsbeispiels nach der Erfindung, welche sich von der bekannten Schaltung nach Figur 1 dadurch unterscheidet, daß mit der zweiten Sperrdiode D2 eine dritte Sperrdiode D3 mit gleicher Stromdurchlaßrichtung in Reihe geschaltet ist, daß vom Verbindungspunkt von Umladekondensator C2a und Umladespule L eine Reihenschaltung aus einem zweiten Umladekondensator C2b, einem weiteren Ladeschalter T3 und einer vierten Sperrdiode D4 mit Bezugspotential verbunden ist, wobei die Anode der vierten Sperrdiode D4 in Richtung vom Bezugspotential zum zweiten Umladekondensator C2b hin stromleitend ist, und daß die Kathode der vierten Sperrdiode D4 mit dem Verbindungspunkt von zweiter und dritter Sperrdiode D2, D3 verbunden ist. Auch hier gilt C1 >> C2a, C2b.

Die beiden Umladekondensatoren C2a und C2b sind auch in diesem Ausführungsbeispiel so dimensioniert, daß die Ladung des Stellgliedes P (oder P') aus einer Parallelschaltung beider Kondensatoren C2a und C2b mit einer gewünschten, maximalen Ladezeit von beispielsweise 200µs erfolgt.

Dazu werden zum Zeitpunkt t0 (Figur 5) beide Ladeschalter T1 und T3 gleichzeitig leitend gesteuert, wodurch das Stellglied P aus den Kondensatoren C1, C2a und C2b über die Umladespule L geladen wird und ein sinusförmiger Strom I durch das Stellglied P, welches durch den Auswahlschalter S ausgewählt wurde, zu fließen beginnt.

Die Spannung an beiden Umladekondensatoren C2a und C2b sinkt gleichmäßig. Bleiben beide Ladeschalter T1 und T3 leitend, bis der Strom I (gestrichelte Kurve) im Zeitpunkt t3 zu Null wird, so beträgt die Ladezeit t3-t0 = 200µs.

Zur Erzielung einer kürzeren Ladezeit wird der Ladeschalter T1 vorzeitig im Zeitpunkt t1 geöffnet, d.h., nichtleitend gesteuert. Dadurch erfolgt der Stromfluß nur noch vom Umladekondensator C2b über die Umladespule L zum Stellglied P, und von diesem über den Auswahlschalter , die Sperrdiode D4 und den weiteren Ladeschalter T3 zurück in den Umladekondensator C2b, gleichsam als "Freilaufstrom" zur Entladung von C2b und L, bis dieser Strom im Zeitpunkt t2 zu Null wird (ausgezogene Kurve von t1 bis t2 in Figur 5). Solange muß der weitere Ladeschalter T3 unbedingt leitend sein.

Dadurch hat die Ladezeit auch in diesem Ausführungsbeispiel nur noch die Dauer t2 - t0. Das Ende der im Zeitpunkt t0 beginnenden Ladezeit kann auf diese Weise zwischen < t1 und t3 variieren, wodurch Ladezeiten von < 100µs bis zum gewählten Maximum, hier 200µs, gewählt werden können.

Am Ende des Ladevorgangs (t2) liegt, wie beim ersten Ausführungsbeispiel, am ersten Umladekondensator C2a, der nicht ganz entladen wurde, noch eine Spannung von beispielsweise +80V, während die Spannung am zweiten Umladekondensator C2b beispielsweise -50V betragen kann.

Beim Entladen des Stellgliedes P, im Zeitpunkt t4 beginnend (Ladeschalter T1 ist nichtleitend), wird Entladeschalter T2 leitend gesteuert. Ist der weitere Ladeschalter T3 zu diesem Zeitpunkt noch leitend, so wird, wie beim ersten Ausführungsbeispiel bereits beschrieben, das Stellglied P über die Umladespule L in beide nun mittels der Diode D2 parallelgeschalteten Umladekondensatoren C2a und C2b entladen, wobei zuerst der zweite Umladekondensator C2b solange geladen wird, bis er die Spannung (+80V) des ersten Umladekondensators C2a erreicht; anschließend werden beide Umladekondensatoren gleichmäßig weitergeladen, bis das Stellglied P entladen ist. Auf diese Weise entspricht wieder jede Entladezeit der jeweils vorangegangenen Ladezeit. Die Entladezeit endet bei dem gewählten Beispiel (Ladezeit t0 bis t2) also bereits im Zeitpunkt t5 (ausgezogene Kurve) statt im Zeitpunkt t6 (gestrichelte Kurve).

Beim Entladen des Stellgliedes P, im Zeitpunkt t4 (Figur 5) beginnend, wobei Ladeschalter T1 nichtleitend ist, wird Entladeschalter T2 leitend gesteuert. Dabei ist Ladeschalter T3 entweder noch aktiv leitend, oder, falls er als MOSFET ausgeführt ist, durch die obligatorische Inversdiode in Richtung zum Entladeschalter T2 stromleitend (in Figur 5 gestrichelt dargestellt) .

Dadurch wird das Stellglied P über die Umladespule L in beide parallelgeschalteten Umladekondensatoren C2a und C2b entladen, wobei wieder zuerst der zweite Umladekondensator C2b solange geladen wird, bis er die Spannung (+80V) des ersten Umladekondensators C2a erreicht; anschließend werden beide Umladekondensatoren gleichmäßig weitergeladen, bis das Stellglied P entladen ist. Auf diese Weise entspricht jede Entladezeit der jeweils vorangegangenen Ladezeit. Die Entladezeit endet bei dem gewählten Beispiel (Ladezeit t0 bis t2) also bereits im Zeitpunkt t5 (ausgezogene Kurve) statt (Ladezeit t0 bis t3) im Zeitpunkt t6 (gestrichelte Kurve).

Der jeweilige Auswahlschalter, S oder S', muß mindestens vom Beginn (t0) der Ladezeit bis zum Ende der Entladezeit (t5 oder t6) leitend sein.

Bei diesem zweiten Ausführungsbeispiel mit verkürzter Ladezeit (Ladeschalter T1 wird vor dem weiteren LadeschalterT3 nichtleitend) kann die Kraftstoffeinspritzmenge dadurch minimiert werden, daß der weitere Ladeschalter T3 und der Entladeschalter T2 invers betrieben werden - T3 leitet, wenn T2 nichtleitend ist, und umgekehrt - wodurch die Entladezeit unmittelbar auf die Ladezeit folgt.
Im Falle, daß T1 und T3 synchron zum Zeitpunkt t0 leitend und zum Zeitpunkt t3 nichtleitend gesteuert werden, ist ein Inversbetrieb von T2 und T3 zu vermeiden. Wenn nämlich gleichzeitig T1 und T3 nichtleitend werden und T2 leitend wird, sind durch kurzzeitige Überschneidungen T1 und T2 leitend und damit der Ladekondensator C1 und die Energiequelle V kurzgeschlossen.

## Patentansprüche

1. Verfahren zum Laden eines kapazitiven Stellgliedes (P, P'), insbesondere eines Kraftstoffeinspritzventils einer Brennkraftmaschine, von einer Ladungsquelle (C1) über eine Reihenschaltung eines Umladekondensators (C2a, C2b) und einer Umladespule (L), und zum Entladen des Stellgliedes (P, P') in den Umladekondensator (C2a, C2b) mit viel kleinerer Kapazität als die Ladungsquelle (C1),
**dadurch gekennzeichnet,**
- **daß** der Umladekondensator (C2a, C2b) eine für eine vorgegebene maximale Ladezeit (t3 - t0) bemessene maximale Kapazität aufweist, und
- **daß** zur Erzielung einer kürzeren Ladezeit (t2 - t0) die Kapazität des Umladekondensators (C2) zu einem bestimmten Zeitpunkt (t1) nach Beginn (t0) des Ladevorgangs auf einen vorgegebenen Wert verringert wird.

2. Verfahren nach Anspruch 1, **dadurch gekennzeichnet,**
- **daß** die maximale Kapazität des Umladekondensators durch eine Parallelschaltung wenigstens zweier Umladekondensatoren (C2a, C2b) erreicht wird, und
- **daß** wenigstens einer (C2a) dieser Umladekondensatoren (C2a, C2b) zu dem bestimmten Zeitpunkt (t1) nach Beginn (t0) des Ladevorgangs von der Ladcungsquelle (C1) getrennt wird.

3. Vorrichtung zur Durchführung des Verfahrens nach Anspruch 1 oder 2, mit einer zwischen einer von einer Energiequelle (V) ladbaren Ladungsquelle (C1) und dem Stellglied (P, P') angeordneten Reihenschaltung eines Ladeschalters (T1a), einer Sperrdiode (D1a), eines Umladekondensators (C2a) und einer Umladespule (L), und mit einem Entladeschalter (T2), der den Verbindungspunkt von Sperrdiode (D1a) und Umladekondensator (C2a) mit einem Bezugspotential verbindet, wobei sämtliche Schalter von einer Steuerschaltung (ST) gesteuert werden,
**dadurch gekennzeichnet,**
- **daß** parallel zur Reihenschaltung aus Ladeschalter (T1a), Sperrdiode (D1a) und Umladekondensator (C2a) wenigstens eine weitere Reihenschaltung aus je einem weiteren Ladeschalter (T1b), einer Sperrdiode (D1b) und einem weiteren Umladekondensator (C2b) angeordnet ist,
- **daß** zwischen jedem einem Ladeschalter (T1a, T1b) zugewandten Anschluß eines Umladekondensators(C2a, C2b) und dem Entladeschalter (T2) eine in Richtung zum Entladeschalter (T2) hin stromleitende Diode (D2a, D2b) angeordnet ist, und
- **daß** Mittel vorgesehen sind, die derart ausgebildet sind, daß zum Laden des Stellgliedes (P, P') beide Ladeschalter (T1a, T1b) von der Steuerschaltung (ST) gleichzeitig leitend gesteuert werden, und zur Verringerung der Kapazität des Umladekondensators (C2a, C2b) einer der Ladeschalter (T1a, T1b) zu dem bestimmten Zeitpunkt (t1) nichtleitend gesteuert wird.

4. Vorrichtung zur Durchführung des Verfahrens nach Anspruch 1 oder 2, mit einer zwischen einer von einer Energiequelle (V) ladbaren Ladungsquelle (C1) und dem Stellglied (P, P') angeordneten Reihenschaltung eines ersten Ladeschalters (T1), einer ersten, vom Ladeschalter (T1) weg stromleitenden ersten Sperrdiode (D1), eines ersten Umladekondensators (C2a) und einer Umladespule (L), und mit einem Entladeschalter (T2), der den Verbindungspunkt der ersten Sperrdiode (D1) und des ersten Umladekondensators (C2a) über eine zu einem Bezugspotential hin stromleitende zweite Sperrdiode (D2) mit dem Bezugspotential verbindet, wobei sämtliche Schalter von einer Steuerschaltung (ST) gesteuert werden,
**dadurch gekennzeichnet,**
- **daß** mit der zweiten Sperrdiode D2 eine dritte Sperrdiode (D3) mit gleicher Stromdurchlaßrichtung in Reihe geschaltet ist,
- **daß** vom Verbindungspunkt des ersten Umladekondensators (C2a) und der Umladespule (L) eine Reihenschaltung aus einem zweiten Umladekondensator (C2b), einem weiteren Ladeschalter (T3) und einer vierten Sperrdiode (D4) mit dem Bezugspotential verbunden ist, wobei die vierten Sperrdiode(D4) in Richtung vom Bezugspotential zum zweiten Umladekondensator (C2b) hin stromleitend ist,
- **daß** die Katode der vierten Sperrdiode (D4) mit dem Verbindungspunkt von zweiter und dritter Sperrdiode (D2, D3) verbunden ist, und
- **daß** Mittel vorgesehen sind, die derart ausgebildet sind, daß zum Laden des Stellgliedes (P, P') beide Ladeschalter (T1, T3) von der Steuerschaltung (ST) gleichzeitig leitend gesteuert werden, und zur Verringerung der Kapazität des Umladekondensators (C2a, C2b) einer der Ladeschalter (T1, T3) zu dem bestimmten Zeitpunkt (t1) nichtleitend gesteuert wird.

5. Vorrichtung nach Anspruch 4, **dadurch gekennzeichnet, daß** bei leitendem Entladeschalter (T2) die Entladung des Stellgliedes (P, P') einerseits über den ersten Umladekondensator (C2a) und andererseits über den zweiten Umladekondensator (C2b) und den leitenden weiteren Ladeschalter (T3) oder dessen Inversdiode erfolgt.

6. Vorrichtung nach Anspruch 4, **dadurch gekennzeichnet, daß** der weitere Ladeschalter (T3) invers zum Entladeschalter (T2) betrieben wird, also leitend ist, wenn der Entladeschalter (T2) nichtleitend ist, und umgekehrt.

## Claims

1. Method for charging a capacitive actuator (P, P'), in particular a fuel injection valve of an internal combustion engine, from a charging source (C1) via a series circuit composed of a recharging capacitor (C2a, C2b) and a recharging coil (L), and for discharging the actuator (P, P') into the recharging capacitor (C2a, C2b) with a much lower capacitance than the charging source (C1),
**characterised in that**
- the recharging capacitor (C2a, C2b) has a maximum capacitance dimensioned for a specified maximum charging time (t3 - t0) and
- **in that** in order to achieve a shorter charging time (t2 - t0) the capacitance of the recharging capacitor (C2) is reduced to a specified value at a specific time (t1) after the start (t0) of the recharging process.

2. Method according to Claim 1 **characterised in that**
- the maximum capacitance of the recharging capacitor is achieved by means of a parallel circuit composed of at least two recharging capacitors (C2a, C2b) and
- **in that** at least one (C2a) of said recharging capacitors (C2a, C2b) is separated from the charging source (C1) at the specific time (t1) after the start (t0) of the recharging process.

3. Device for carrying out the method according to Claim 1 or 2 with a series circuit which is located between a charging source (C1), which can be charged from a power source (V), and the actuator (P, P') and which is composed of a charging switch (Tla), a blocking diode (Dla), a recharging capacitor (C2a) and a recharging coil (L), and with a discharging switch (T2) which connects the connecting point of the blocking diode (Dla) and recharging capacitor (C2a) to an earth reference potential, with all the switches being controlled by a control circuit (ST),
**characterised in that**
- connected in parallel with the series circuit composed of charging switch Tla, blocking diode D1a and recharging capacitor C2a is at least one further series circuit composed of in each case a further charging switch (T1b), a blocking diode (D1b) and a further recharging capacitor (C2b),
- **in that** a diode (D2a, D2b) conducting current in the direction of the discharging switch (T2) is located between each terminal, facing a charging switch (T1a, T1b), of a recharging capacitor (C2a, C2b) and the discharging switch (T2) and
- **in that** means are provided designed in such a way that, for charging the actuator (P, P'), the two charging switches (T1a, T1b) are simultaneously switched on by the control circuit (ST) and one of the charging switches (T1a, T1b) is switched off at the specific time (t1) in order to reduce the capacitance of the recharging capacitor (C2a, C2b).

4. Device for carrying out the method according to Claim 1 or 2 with a series circuit which is located between a charging source (C1), which can be charged from a power source (V), and the actuator (P, P') and which is composed of a first charging switch (T1), a first blocking diode (D1) conducting current away from the charging switch (T1), a first recharging capacitor (C2a) and a recharging coil (L), and with a discharging switch (T2) which connects the connecting point of the first blocking diode (D1) and of the first recharging capacitor (C2a) to an earth reference potential via a second blocking diode (D2) conducting current to the earth reference potential, with all the switches being controlled by a control circuit (ST),
**characterised in that**
- a third blocking diode (D3) with the same current-conducting direction is connected in series with the second blocking diode D2,
- **in that** a series circuit composed of a second recharging capacitor (C2b), a further charging switch (T3) and a fourth blocking diode (D4) is connected to the earth reference potential from the connecting point of the first recharging capacitor (C2a) and the recharging coil (L), with the fourth blocking diode (D4) conducting current in the direction from the earth reference potential to the second recharging capacitor (C2b),
- **in that** the cathode of the fourth blocking diode (D4) is connected to the connecting point of the second and third blocking diode (D2, D3) and
- **in that** means are provided designed in such a way that, for charging the actuator (P, P'), the two charging switches (T1, T3) are simultaneously switched on by the control circuit (ST) and one of the charging switches (T1, T3) is switched off at the specific time (t1) in order to reduce the capacitance of the recharging capacitor (C2a, C2b).

5. Device according to Claim 4 **characterised in that**, when the discharging switch (T2) is on, the actuator (P, P') is discharged on the one hand via the first recharging capacitor (C2a) and, on the other hand, via the second recharging capacitor (C2b) and the conducting other charging switch (T3) or its inverse diode.

6. Device according to Claim 4 **characterised in that** the other charging switch (T3) is operated inversely to the discharging switch (T2), which is to say it is on when the discharging switch (T2) is off, and vice versa.

## Revendications

1. Procédé permettant de charger un actionneur capacitif (P, P'), notamment une soupape d'injection de carburant dans un moteur à combustion, à partir d'une source de charge (C1) à travers un circuit série composé d'un condensateur d'inversion de charge (C2a, C2b) et d'une bobine d'inversion de charge (L), et de décharger l'actionneur (P, P') dans le condensateur d'inversion de charge (C2a, C2b), qui a une capacité beaucoup plus faible que la source de charge (C1),
**caractérisé par le fait**
- **que** le condensateur d'inversion de charge (C2a, C2b) a une capacité maximum dimensionnée pour un temps de charge (t3 - t0) maximum donné et
- **que**, pour parvenir à un temps de charge (t2 - t0) plus court, la capacité du condensateur d'inversion de charge (C2) est ramenée à une valeur donnée à un instant (t1) déterminé situé après le début (t0) du processus de charge.

2. Procédé selon la revendication 1
**caractérisé par** l e fait
- que la capacité maximum du condensateur d'inversion de charge est obtenue grâce à un montage en parallèle d'au moins deux condensateurs d'inversion de charge (C2a, C2b) et
- que au moins l'un de ces condensateurs d'inversion de charge (C2a, C2b) est séparé de la source de charge (C1) à un instant (t1) déterminé situé après le début (t0) du processus de charge.

3. Dispositif destiné à l'exécution du procédé selon la revendication 1 ou 2, comportant un montage en série, placé entre une source de charge (C1), qui peut être chargée par une source d'énergie (V), et l'actionneur (P, P') et comprenant un commutateur de charge (T1a), une diode de blocage (D1a), un condensateur d'inversion de charge (C2a) et une bobine d'inversion de charge (L), et comportant un commutateur de décharge (T2), qui relie au potentiel de référence le point commun entre la diode de blocage (D1 a) et le condensateur d'inversion de charge (C2a), tous les commutateurs étant contrôlés par un circuit de commande (ST),
**caractérisé par le fait**
- **que**, en parallèle sur le circuit série comprenant le commutateur de charge (T1a), la diode de blocage (D1a) et le condensateur d'inversion de charge (C2a), est disposé au moins un autre circuit série comprenant chacun un autre commutateur de charge (T1b), une diode de blocage (D1b) et une autre condensateur d'inversion de charge (C2b),
- **que**, entre chaque borne d'un condensateur d'inversion de charge (C2a, C2b) qui se trouve du côté d'un commutateur de charge (T1a, T1b) et le commutateur de décharge (T2), est disposée une diode (D2a, D2b), qui est passante dans le sens allant vers le commutateur de décharge (T2), et
- **qu'**il est prévu des moyens conçus de telle sorte que, pour charger l'actionneur (P, P'), les deux commutateurs de charge (T1a, T1b) sont mis en même temps dans leur état passant par le circuit de commande (ST) et, pour diminuer la capacité du condensateur d'inversion de charge (C2a, C2b), l'un des commutateurs de charge (T1a, T1b) est mis dans son état non-passant à un instant (t1 ) déterminé.

4. Dispositif destiné à l'exécution du procédé selon la revendication 1 ou 2, comportant un montage en série, placé entre une source de charge (C1), qui peut être chargée par une source d'énergie (V), et l'actionneur (P, P'), et comprenant un premier commutateur de charge (T1), une première diode de blocage (D1), qui est passante pour un courant partant du commutateur de charge (T1), un premier condensateur d'inversion de charge (C2a) et une bobine d'inversion de charge (L), et un commutateur de décharge (T2), qui, par l'intermédiaire d'une deuxième diode de blocage (D2), qui est passante pour un courant allant vers un potentiel de référence, relie au potentiel de référence le point commun entre la première diode de blocage (D1) et le premier condensateur d'inversion de charge (C2), tous les commutateurs étant contrôlés par un circuit de commande (ST)
**caractérisé par le fait**
- **qu'**une troisième diode de blocage (D3) est montée en série avec la deuxième diode de blocage (D2) et ceci avec le même sens passant,
- **que**, à partir du point commun entre le premier condensateur d'inversion de charge (C2a) et la bobine d'inversion de charge (L), un circuit série, comprenant un deuxième condensateur d'inversion de charge (C2b), un autre commutation de charge (T3) et une quatrième diode de blocage (D4), est relié au potentiel de référence, la quatrième diode de blocage (D4) étant passante dans le sens allant du potentiel de référence au deuxième condensateur d'inversion de charge (C2b),
- **que** la cathode de la quatrième diode de blocage (D4) est reliée au point commun entre la deuxième et la troisième diode de blocage (D2, D3) et
- **qu'**il est prévu des moyens conçus de telle sorte que, pour charger l'actionneur (P, P'), les deux commutateurs de charge (T1, T3) sont mis en même temps dans leur état passant par le circuit de commande (ST) et, pour diminuer la capacité du condensateur d'inversion de charge (C2a, C2b), l'un des commutateurs de charge (T1, T3) est mis dans son état non-passant à un instant (t1) déterminé.

5. Dispositif selon la revendication 4
**caractérisé par le fait**
**que**, si le commutateur de décharge (T2) est passant, la décharge de l'actionneur (P, P') se fait, d'une part, à travers le premier condensateur d'inversion de charge (C2a) et, d'autre part, à travers le deuxième condensateur d'inversion de charge (C2b) et l'autre commutateur de charge (T3), qui est passant, ou sa diode d'inversion.

6. Dispositif selon la revendication 4
**caractérisé par le fait**
**que** l'autre commutateur de charge (T3) travaille en inversion avec le commutateur de décharge (T2), par conséquent, qu'il est passant lorsque le commutateur de décharge (T2) est non-passant et vice-versa.
